(19) Europäisches Patentamt
European Patent Office
Office européen des brevets

(11) EP 0 503 879 B1

(12) EUROPEAN PATENT SPECIFICATION

(45) Date of publication and mention
of the grant of the patent:
**27.12.1996 Bulletin 1996/52**

(51) Int Cl.6: **H02P 7/62**, H02P 6/00

(21) Application number: **92302002.8**

(22) Date of filing: **09.03.1992**

(54) **Synchronous motor with permanent magnets and motor system**

Synchronmotor mit permanenten Magneten und Motorsystem

Moteur synchrone avec aimants permanents et système de moteur

(84) Designated Contracting States:
**DE FR GB**

(30) Priority: **08.03.1991 JP 69212/91**

(43) Date of publication of application:
**16.09.1992 Bulletin 1992/38**

(73) Proprietor: **HONDA GIKEN KOGYO KABUSHIKI
KAISHA
Minato-ku, Tokyo (JP)**

(72) Inventor: **Imai, Nobuyuki,
c/o Honda R & D Co., Ltd.
Wako-shi, Saitama (JP)**

(74) Representative: **Tomlinson, Kerry John et al
Frank B. Dehn & Co.,
European Patent Attorneys,
179 Queen Victoria Street
London EC4V 4EL (GB)**

(56) References cited:
- **CONFERENCE RECORD OF THE 1989 IEEE IAS
ANNUAL MEETING, Part I, October 1989, San
Diego CA, US, XP 91626, pp. 656-661; A.
KUMAMOTO et al.: 'A semi-closed loop torque
control of a buried permanent magnet motor
based on a new flux weakening approach'**
- **IEEE TRANSACTIONS ON INDUSTRY
APPLICATIONS, vol. 27, no. 5, September 1991,
New York, US, XP264068, pp. 997-1004; S.R.
MACMINN et al.: 'Control Techniques for
Improved High-speed performance of Interior
PM Synchronous Motor Drives'**

**Description**

The present invention relates to a synchronous motor with permanent magnets which is suitable for operation under equivalent field weakening control, and a motor system including such a synchronous motor.

*BASICS AND APPLICATIONS OF BRUSHLESS SERVOMOTORS,* published by General Electronic Publishing Company, describes the technology given below, in Chapter 6, Section 2, *Control of Brushless Servomotor,* and Chapter 6, Section 4, *Equivalent Field Weakening Control.*

Alternating currents flow through a brushless servomotor, and the relative speed of axes (d-, q-axes) rotating in synchronism with the alternating currents is zero, simplifying an equation model.

According to a model based on the d/q-axis conversion proposed by Coulomb, the voltage and current of a brushless motor are related to each other as described by the equations (1) below.

$$\begin{bmatrix} Vd \\ Vq \end{bmatrix} = \begin{bmatrix} Ra+pLa & -\omega mLa \\ \omega mLa & Ra+pLa \end{bmatrix} \begin{bmatrix} id \\ iq \end{bmatrix} + \begin{bmatrix} \omega m\phi \\ 0 \end{bmatrix}$$

$$Te = 3/4 \times (\text{number of poles}) \times \phi id = J\omega m + B\omega m + Tl \qquad (1)$$

where

Ra:   Armature resistance,
La:   Armature inductance,
J:    Motor inertia,
$\phi$:    Magnetic flux (constant) of permanent magnets,
$\omega m$:  Motor angular velocity,
B:    Coefficient of viscous friction,
p:    d/dt,
Vd:  d-axis voltage,
Vq:  q-axis voltage,
id:   d-axis current,
iq:   q-axis current,
Te:  Output torque, and
Tl:   Load torque.

Generally, the q-axis current iq is controlled so that it is zero. Therefore, the d-axis current id becomes the motor current. Since the values pLa id and pLa iq are zero under the normal condition, the voltages Vd Vq at the terminals of the motor are expressed by the following equations (2):

$$Vd = Ra\,id - \omega mLa\,iq + \omega m\phi,$$

$$Vq = Ra\,iq + \omega mLa\,id \qquad (2).$$

The field of a brushless servomotor with permanent magnets cannot be controlled because the field current cannot be varied. The voltage of the armature increases in proportion to the speed of the rotor. When the armature voltage exceeds the maximum voltage of a voltage source PWM inverter, the motor cannot operate at a speed higher than the speed corresponding to that voltage.

The equivalent field weakening control process which reduces the field intensity based on the armature reaction makes it possible to rotate the motor at higher speed.

According to the torque equation (1) and the equations (2), if the q-axis current iq is iq = 0, then the motor terminal voltage increases in proportion to the motor angular velocity $\omega m$ and the d-axis current id, i.e., the instantaneous torque. Therefore, the equivalent field weakening control process is carried out by controlling the q-axis current iq.

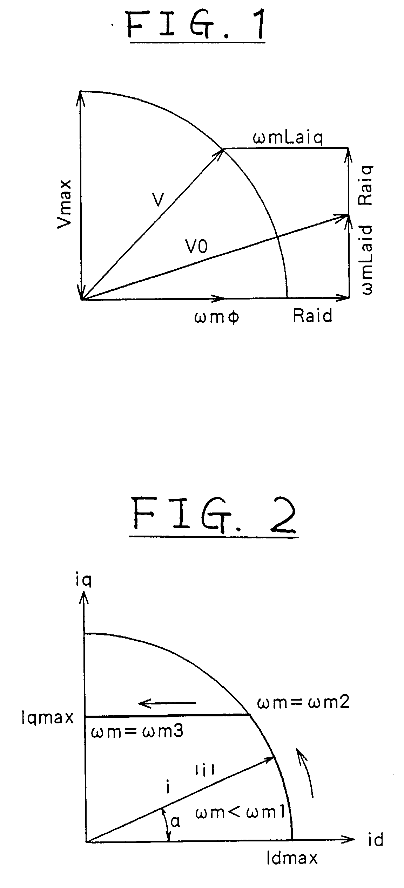

FIG. 1 of the accompanying drawings shows voltage vectors under the normal condition.

In FIG. 1, V0 represents the motor terminal voltage when the q-axis current iq is iq = 0.

When the q-axis current iq is fully controlled, the motor terminal voltage V can be equalized to the maximum output voltage Vmax of the voltage source PWM inverter, as shown in FIG. 1.

The motor current should be lower than an allowable maximum current Imax. Therefore, the maximum output torque should be limited in its magnitude when the motor operates at high speed.

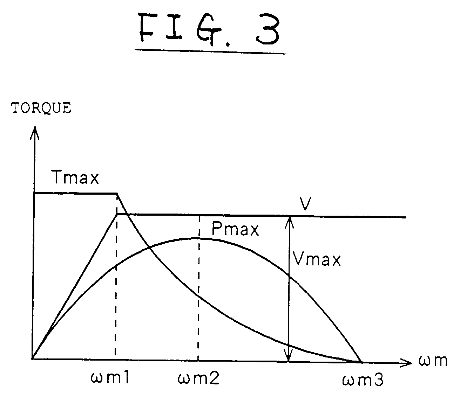

FIG. 2 of the accompanying drawings shows current vectors indicating the path a motor current i follows when the output torque of the motor is maximum. FIG. 3 of the accompanying drawings shows the relationship between the torque, the output, the voltage, and the motor speed that are required for the motor to operate under the field weakening control.

If the motor angular velocity $\omega m$ exceeds a value $\omega m1$ (FIG. 3), then the motor terminal voltage V is held to Vmax by controlling the q-axis current iq. The maximum output torque is reduced by reducing the d-axis current id.

If the motor angular velocity $\omega m$ exceeds a value $\omega m2$, then the q-axis current iq is held to Iqmax.

If the motor angular velocity $\omega m$ exceeds a value $\omega m3$, then the d-axis current id, i.e., the output torque Te, becomes zero. The motor angular velocity $\omega m3$ at this time is the allowable maximum rotational speed of the synchronous motor with permanent magnets.

Various motors have been operated according to the equivalent field weakening control process. As a result, it has been found that the motors have widely different ranges of rotational speeds within which the motor output can exceed the output (hereinafter referred to as "rated output") at the maximum rotational speed (hereinafter referred to as "rated motor speed") under normal operating conditions (i.e. without equivalent field-weakening control), the ranges of rotational speeds being represented by a ratio k by which the rated motor speed can be multiplied into the rotational speed.

It is an object of the present invention to provide a synchronous motor with permanent magnets which is suitable for operation according to an equivalent field weakening control process, and a motor system including such a synchronous motor.

According to the present invention, there is provided a synchronous motor with permanent magnets having an inductance La, a rated current Ip, and an induced voltage constant ke in a d/q-axis conversion system of the synchronous motor, characterized in that the inductance La, rated current Ip and induced voltage constant ke have values such that a value $\alpha$ produced by dividing the product of the inductance La and the rated current Ip by the induced voltage constant ke according to an equation (3) falls in a range represented by an inequality (4):

$$La \cdot Ip/ke = \alpha \tag{3}$$

$$\sqrt{\frac{(k-1)^2}{k^2-1}} \leq \alpha \leq \sqrt{\frac{(k+1)^2}{k^2-1}} \tag{4}$$

where k is a ratio greater than one by which a rated rotational speed can be multiplied to give a rotational speed for operation without reducing the output below the rated output and wherein the value $\alpha$ is equal to 1.

According to the present invention, there is also provided a motor system comprising a synchronous motor with permanent magnets and a driver circuit for driving the synchronous motor, the motor system having an inductance Ls, a rated current Ip, and an induced voltage constant ke in a d/q-axis conversion system of the motor system, characterized in that the inductance Ls, rated current Ip and induced voltage constant ke have values such that a value $\alpha$ produced by dividing the product of the inductance Ls and the rated current Ip by the induced voltage constant ke according to an equation (5) falls in a range represented by an inequality (6):

$$Ls \cdot Ip/ke = \alpha \tag{5}$$

where k is a ratio by which a rated rotational speed can be multiplied to give a rotational speed for operation

$$\sqrt{\frac{(k-1)^2}{k^2-1}} \leq \alpha \leq \sqrt{\frac{(k+1)^2}{k^2-1}} \tag{6}$$

without reducing the output below the rated output, and wherein the value $\alpha$ is equal to 1.

The motor system further includes correcting-inductances connected in series or parallel to windings of the synchronous motor for making the inductance Ls satisfy the equation (c).

The above and further objects, details and advantages of the present invention will become apparent from the following detailed description of preferred embodiments thereof given by way of example only, when read in conjunction with the accompanying drawings.

FIG. 1 is a diagram of voltage vectors under the normal conditions, the diagram being illustrative of the prior art;
FIG. 2 is a diagram of current vectors indicating the path which a motor current follows when the output torque of the motor is maximum, the diagram being illustrative of the prior art;
FIG. 3 is a diagram showing the relationships between the torque, the output, the voltage, and the motor speed that are required for the motor to operate under field weakening control, the diagram being illustrative of the prior art;
FIG. 4 is a diagram of voltage vectors when a synchronous motor rotates at a rated speed;
FIG. 5 is a diagram of voltage vectors which is a simplified version of the diagram of FIG. 4;
FIG. 6 is a diagram of voltage vectors when the synchronous motor rotates at a speed which is $k$ times higher than the rated speed;
FIG. 7 is a diagram showing operating characteristics of a synchronous motor;
FIG. 8 is a diagram showing operating characteristics of a synchronous motor;
FIG. 9 is a diagram showing operating characteristics of a synchronous motor;
FIG. 10 is a diagram showing operating characteristics of a synchronous motor;
FIG. 11 is a diagram showing operating characteristics of the synchronous motor according to Fig. 7 with the phase resistance doubled;
FIG. 12 is a diagram showing operating characteristics of the synchronous motor according to Fig. 7 with the phase resistance halved; and
FIG. 13 is a circuit diagram, partly in block form, of a motor system employing a synchronous motor according to the present invention.

In the description below, values as converted onto d- and q-axes will be dealt with.
It is assumed that a maximum current which can be continuously supplied to a motor is referred to as a rated current Ip, and a rotational speed at which the motor can continuously produce a maximum output under ordinary orthogonal field control is referred to as A.

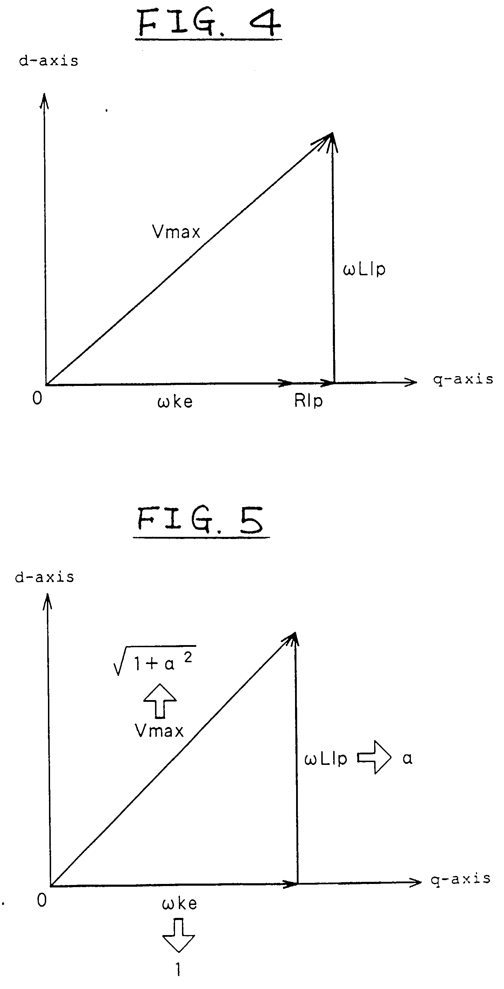

FIG. 4 shows voltage vectors when a synchronous motor rotates at a rated speed.
In FIG. 4, ke represents an induced voltage constant, R a phase resistance, L a phase inductance, $\omega$ an electrical angular frequency, Ip a rated current, and Vmax a maximum output voltage from an inverter.
If it is assumed that an induced voltage vector $\omega$ke and a voltage vector $\omega$LIp based on the phase inductance are sufficiently larger than a voltage vector RIp based on the phase resistance R, then the voltage vector diagram of FIG. 4 can be simplified into a voltage vector diagram shown in FIG. 5.
In FIG. 5, when the induced voltage vector $\omega$ke is normalized to 1, and LIp/ke is represented by $\alpha$, the inverter maximum output voltage Vmax can be expressed by the following equation (7):

$$|Vmax| = \sqrt{1+\alpha^2} \tag{7}$$

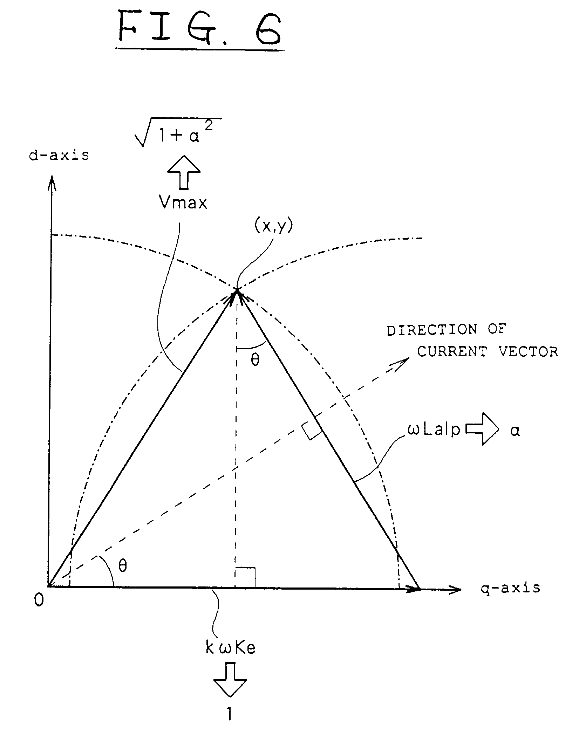

It is now assumed that the synchronous motor is operated at a speed that is k times higher than the rated speed.
Because of the limited field, the maximum current is limited to the rated current Ip. The motor cannot be supplied with voltages higher than the inverter maximum output voltage vector Vmax. Therefore, voltage vectors produced when the motor is operated at a speed that is k times higher than the rated speed are as shown in FIG. 6.
As with FIG. 5, the induced voltage vector $\omega$ke is normalized to 1, and LIp/ke is represented by $\alpha$. The coordinates (x, y) of a point of intersection between the induced voltage vector $k\omega$LIp and the inverter maximum output voltage Vmax are given as the solutions of simultaneous equations (8) and (9) below.

$$(x-k)^2 + y^2 = k^2\alpha^2 \tag{8}$$

$$x^2 + y^2 = 1 + \alpha^2 \tag{9}$$

These equations (8) and (9) are solved for x and y. First, the equation (9) is subtracted from the equation (8), providing an equation (10). The equation (10) is squared into an equation (11), which is substituted in the equation (9), providing an equation (12).

$$-2kx + k^2 = -1 + (k^2-1)\alpha^2$$

$$x = \frac{k^2+1}{2k} - \frac{k^2-1}{2k}\alpha^2 \tag{10}$$

$$x^2 = \frac{(k^2+1)^2}{4k^2} - \frac{(k^2+1)(k^2-1)}{2k^2}\alpha^2 + \frac{(k^2-1)^2}{4k^2}\alpha^4 \tag{11}$$

$$y^2 = 1 - \alpha^2 - x^2$$

$$= \frac{4k^2-(k^2+1)^2}{4k^2} + \frac{2k^2+k^4-1}{2k^2}\alpha^2 - \frac{(k^2-1)^2}{4k^2}\alpha^4$$

$$= -\frac{(k^2-1)^2}{4k^2} + \frac{(k^2+1)^2-2}{2k^2}\alpha^2 - \frac{(k^2-1)^2}{4k^2}\alpha^4 \tag{12}$$

The direction of a current vector indicated by the dotted line in FIG. 6 is perpendicular to the voltage vector k$\omega$LIp based on the inductance. Therefore, the angle (torque angle) $\theta$ formed between the current vector and the induced voltage vector k$\omega$ke is equal to the angle formed between the voltage vector k$\omega$LIp based on the inductance and a line extending from the point (x, y) of intersection between the vector k$\omega$LIp based on the inductance and the inverter maximum output voltage vector Vmax perpendicularly to the q-axis.

Accordingly, the power factor cos$\theta$ is given by the equation (13).

$$\cos\theta = \frac{y}{\alpha^2} \tag{13}$$

The greater the power factor, the more efficiently it is possible to operate the motor for generating a maximum output with a fixed current.

The independent variablesk, $\alpha$ are determined such that they have the most efficient values.

The power factor is a monotonicly increasing function in the range of $0 < \theta < \Pi/2$. The independent variables k, $\alpha$ are determined so as to give a maximum value of cos$\theta$ and a maximum value of the square of cos$\theta$.

The following equation (14) is derived from the equations (12) and (13):

$$\cos^2\theta = \frac{y^2}{k^2\alpha^2}$$

$$= \frac{-\frac{(k^2-1)^2}{4k^2} + \frac{(k^2+1)^2-2}{2k^2}\alpha^2 - \frac{(k^2-1)^2}{4k^2}\alpha^4}{k^2\alpha^2}$$

$$= -\frac{(k^2-1)^2}{4k^4}\alpha^{-2} + \frac{(k^2+1)^2-2}{2k^4} - \frac{(k^2-1)^2}{4k^4}\alpha^2 \tag{14}$$

The equation (14) is partially differentiated into the following equation (15):

$$\frac{\partial}{\partial\alpha}\cos^2\theta = +\frac{(k^2-1)^2}{2k^2}\alpha^{-3} - \frac{(k^2-1)^2}{2k^2}\alpha$$

$$= \frac{(k^2-1)^2}{2k^2}\left(\frac{1-\alpha^4}{\alpha^3}\right) \tag{15}$$

Because of the relationship represented by the equations (16) below, it can be understood that the power factor

is maximum when $\alpha = 1$ irrespective of k.

$$\frac{(k^2-1)^2}{2k^2} > 0$$

$$\alpha > 0 \tag{16}.$$

Thus, under the field-weakening control, the synchronous motor or a motor system incorporating the same can be operated most efficiently when the following equation (17) is satisfied:

$$\frac{Llp}{ke} = 1 \tag{17}.$$

The output P of the motor when it is operated at a speed that is k times higher than the rated speed is indicated by the following equation (18):

$$P = Ip \times \omega ke \times \cos\theta$$

$$= Ip \times k \times \frac{y}{k\alpha}$$

$$= Ip \times \frac{y}{\alpha}$$

Therefore, the ratio $y/\alpha$ of the y coordinate of the point (x, y) of intersection between the voltage vector $k\omega Llp$ based on the inductance and the inverter maximum output voltage vector Vmax to $\alpha$ may be equal to or greater than 1.

Since complex equations would be required to determine the coordinate y, a range of $\alpha$ in which the square of $(y/\alpha)$ is 1 or more is determined according to the following inequality (19) of second degree with respect to the square of $\alpha$. The inequality (19) is modified into an inequality (20), from which an inequality (21) is derived.

$$(\frac{y}{\alpha})^2 = -\frac{(k^2-1)^2}{4k^2}(\alpha^2+\frac{1}{\alpha^2}) + \frac{(k^2+1)^2-2}{2k^2} \geq 1$$

$$\frac{(k^2-1)^2}{4k^2}(\alpha^2+\frac{1}{\alpha^2}) \leq \frac{(k^2+1)^2-2-2k^2}{2k^2}$$

$$(\alpha^2+\frac{1}{\alpha^2}) \leq 2\frac{k^4-1}{(k^2-1)^2} = \frac{2(k^2+1)}{k^2-1} \tag{19}.$$

$$\alpha^4 - \frac{2(k^2+1)}{k^2-1}\alpha^2 + 1 \leq 0$$

$$\frac{k^2+1}{k^2-1} - \sqrt{(\frac{k^2+1}{k^2-1})^2 - 1} \leq \alpha^2$$

$$\leq \frac{k^2+1}{k^2-1} + \sqrt{(\frac{k^2+1}{k^2-1})^2 - 1}$$

$$\frac{(k-1)^2}{k^2-1} \leq \alpha^2 \leq \frac{(k+1)^2}{k^2-1} \tag{20}.$$

$$\sqrt{\frac{(k-1)^2}{k^2-1}} \leq \alpha \leq \sqrt{\frac{(k+1)^2}{k^2-1}} \tag{21}.$$

It can be seen that when k is larger than 1, an inequality (22), given below, is derived from the inequality (21), and the rated output cannot be maintained when the motor rotates at the speed k times higher than the rated speed unless $\alpha$ takes a value within a range including 1.

$$0 \le \sqrt{\frac{(k-1)^2}{k^2-1}} \le 1 \le \sqrt{\frac{(k+1)^2}{k^2-1}} \qquad (22).$$

As indicated by the following equations (23), it is necessary for the value $\alpha$ to be $\alpha = 1$ in order to maintain the rated output at a desired rotational speed in excess of the rated rotational speed:

$$\lim_{k \to \infty} \sqrt{\frac{(k-1)^2}{k^2-1}} = 1$$

$$\lim_{k \to \infty} \sqrt{\frac{(k+1)^2}{k^2-1}} = 1 \qquad \cdots (23).$$

In an actual motor and a motor system employing the same, however, the range of rotational speeds in which the rated output can be maintained even when $\alpha = 1$ is limited because of the core loss, the copper loss, and the machine loss.

When a ratio k by which the rated rotational speed can be multiplied into a speed at which the motor can rotate without reducing the output below the rated output is given, any motor or any motor system whose value $\alpha$ satisfies the condition represented by the equation (21) can be operated up to a speed which is k times higher than the rated rotational speed without reducing the output below the rated output.

If the value $\alpha$ is set to 1, then the range of rotational speeds in which the desired output can be obtained can be increased for efficient field-weakening motor operation.

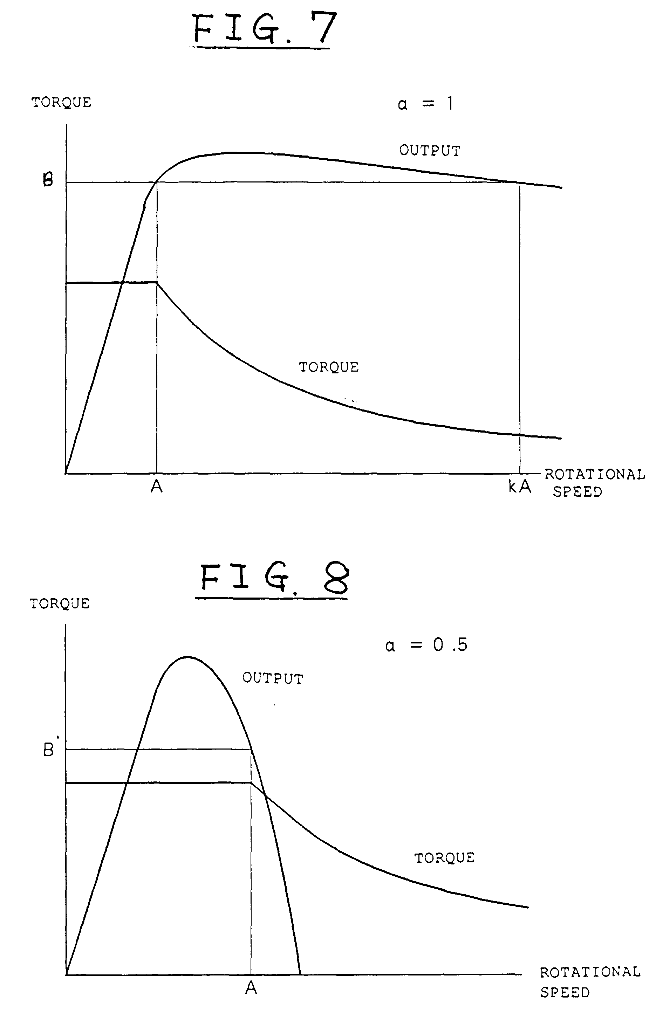

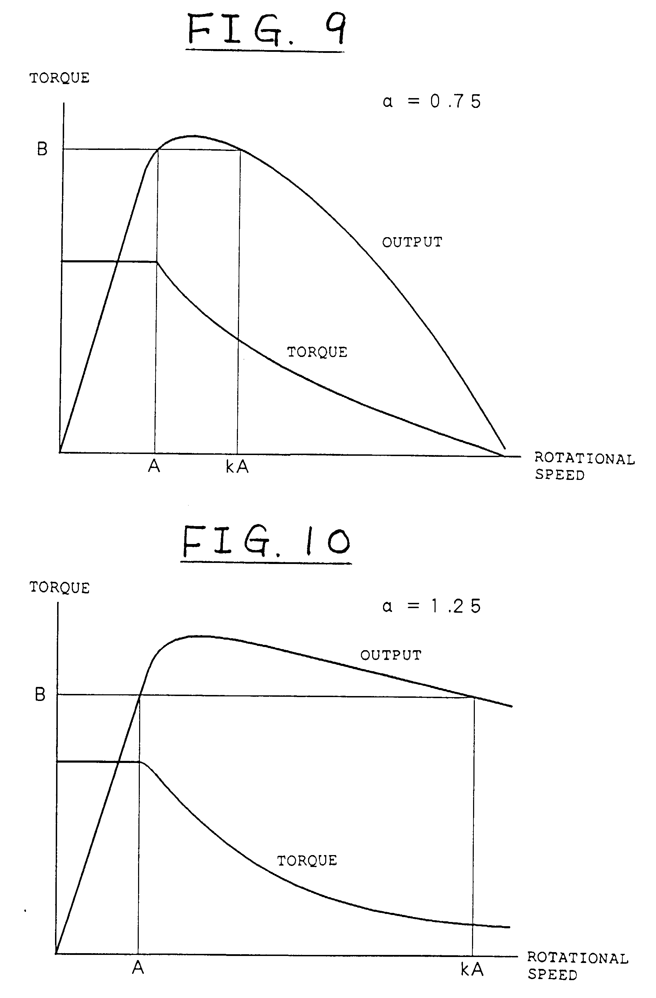

Table 1 below shows various specifications of synchronous motors with permanent magnets according to first through fourth embodiments. Operating characteristics of the synchronous motors according to the first through fourth embodiments under equivalent field weakening control are shown in FIGS. 7 through 10, respectively.

In the synchronous motors according to the first through fourth embodiments, the values $\alpha$ in Table 1 are obtained by varying the inductance La in the d-q coordinate system.

Table 1

| Embodiment | 1st | 2nd | 3rd | 4th |
|---|---|---|---|---|
| $\alpha$ | 1 | 0.5 | 0.75 | 1.75 |
| Char. | FIG. 7 | FIG. 8 | FIG. 9 | FIG. 10 |
| La ($\mu$H) | 38 | 19 | 29 | 48 |
| Pmax (kW) | 4 | 4.4 | 4.3 | 3.5 |
| Vmax (V) | 24 | | | |

| Imax (A) | 150 |
|---|---|
| ke | 0.0058 |

In FIGS. 7 through 10, A represents the rated rotational speed, B the rated output, and kA the highest rotational speed at which the rated output B can be maintained.

It can be understood from FIGS. 7 through 10 that while the motors are operated under field weakening control, the rotational speed can be varied through the range when $\alpha = 1$.

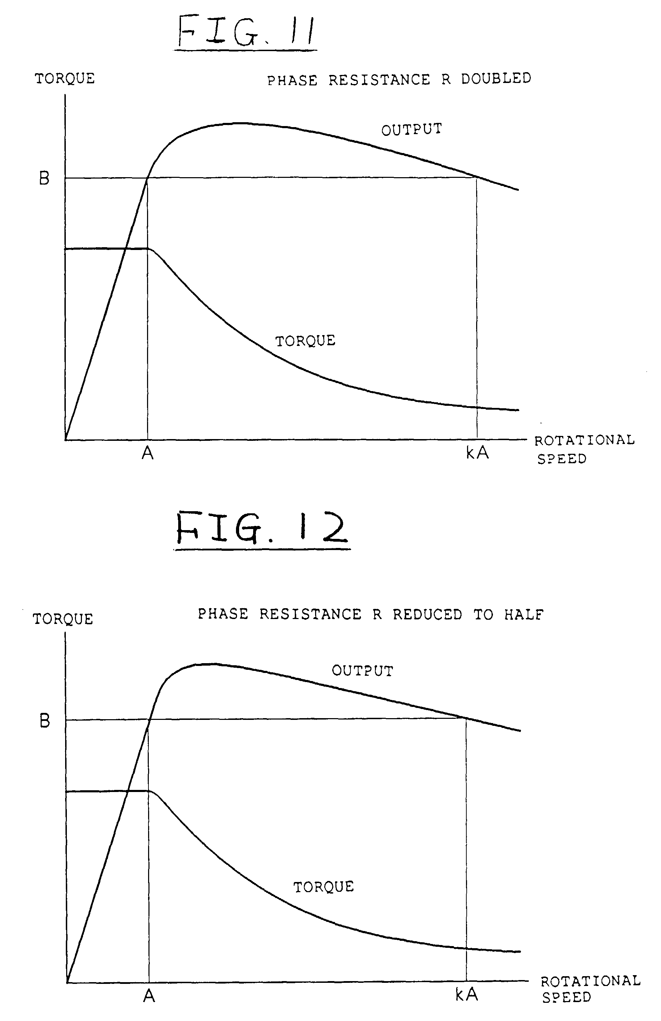

FIGS. 11 and 12 shows characteristics,with which optimum conditions for operating motors under field weakening control can be determined, based only on the induced voltage constant ke, the rated current Ip, and the inductance La, and that these characteristics are not substantially affected by the phase resistance R.

The diagram of FIG. 11 shows operating characteristics of the synchronous motor according to Fig. 7 with the phase resistance doubled, and the diagram of FIG. 12 shows operating characteristics of the synchronous motor according to Fig. 7 with the phase resistance halved.

The output curves shown in FIGS. 11 and 12 are slightly higher and lower respectively, than that shown in Fig. 7, because of the varied phase resistance R. However, the ranges in which the outputs exceed the rated outputs and the degree to which the outputs are lowered in FIGS. 11 and 12 remain basically unchanged .

When the power supply voltage applied to the motors is varied from a value that is 0.5 times the normal value to a value that is 1.5 times the normal value, the ranges in which the outputs exceed the rated outputs and the degree to which the outputs are lowered remain basically unchanged, as when the phase resistance R is varied.

Motors for producing medium and high outputs will be described below with reference to Tables 2 and 3, below.

Table 2 shows characteristics of a motor having a power supply voltage of 48 V and a rated output of 4 kW. The motor is designed such that the phase induced voltage at the time the rated output is produced is 20 V. The phase current Ip at the time the rated output is produced is 133 A (effective value is 94 A).

Induced voltage constants and optimum inductance values with respect to different pole numbers when the rated rotational speeds are of 3000, 4500, and 6000 rpm are given in Table 2. The optimum inductance values refer to optimum values for operation under equivalent field weakening control and allowing a wide variable range of rotational speeds in which the motor can be operated for an output higher than a predetermined output.

Table 2

| Rated speed | 3000 (rpm) | | 4500 (rpm) | | 6000 (rpm) | |
|---|---|---|---|---|---|---|
| Items | ke | La | ke | La | ke | La |
| 4 poles | 0.032 | 240 µH | 0.021 | 158 µH | 0.016 | 120 µH |
| 10 poles | 0.0127 | 96 µH | 0.0085 | 64 µH | 0.0064 | 48 µH |
| 20 poles | 0.0064 | 48 µH | 0.0043 | 32 µH | 0.0032 | 24 µH |

Table 3 shows characteristics of a motor having a power supply voltage of 200 V and a rated output of 100 kW. The motor is designed such that the phase induced voltage at the time the rated output is produced is 90 V. The phase current Ip at the time the rated output is produced is 740 A (effective value is 523 A).

Induced voltage constants and optimum inductance values with respect to different pole numbers when the rated rotational speeds are of 3000, 4500, and 6000 rpm are given in Table 3.

Table 3

| Rated speed | 3000 (rpm) | | 4500 (rpm) | | 6000 (rpm) | |
|---|---|---|---|---|---|---|
| Items | ke | La | ke | La | ke | La |
| 4 poles | 0.143 | 194 µH | 0.095 | 129 µH | 0.072 | 97 µH |
| 10 poles | 0.057 | 77 µH | 0.038 | 52 µH | 0.029 | 39 µH |
| 20 poles | 0.029 | 39 µH | 0.019 | 26µH | 0.015 | 20 µH |

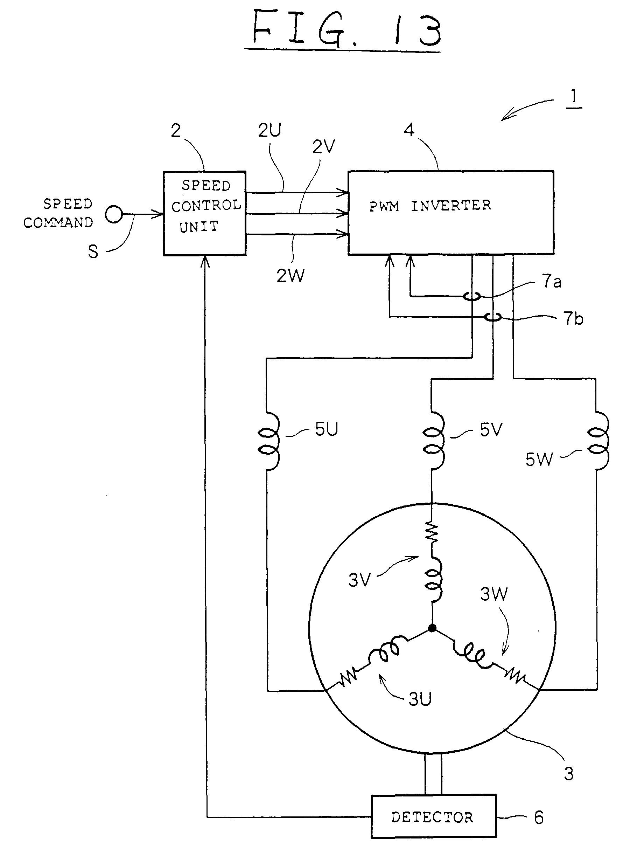

FIG. 13 shows a circuit, partly in block form, of a motor system employing a synchronous motor according to the present invention.

The motor system, generally designated by the reference numeral 1, comprises;a speed control unit 2 for generating command information 2U, 2V, 2W with respect to current values for respective phases U, V, W; a PWM inverter 4 for supplying electric energy or currents to a synchronous motor 3 having permanent magnets based on the command information 2U, 2V, 2W; correcting inductances 5U, 5V, 5W connected in series to respective windings 3U, 3V, 3W of the motor 3 ;a detector 6 for detecting the angular displacement or the rotational speed of the motor 3; and current detectors 7a, 7b for detecting currents supplied to the motor 3.

If the motor 3 is to be operated under field weakening control while maintaining a predetermined output up to a speed that is k times the rated rotational speed, then when the inductance La of the motor 3 itself does not satisfy the operating conditions on its own, the motor 3 can be operated as desired with the correcting inductances 5U, 5V, 5W connected in series to the respective windings 3U, 3V, 3W of the motor 3.

In FIG. 13, the correcting inductances 5U, 5V, 5W are connected in series to the respective windings 3U, 3V, 3W of the motor 3, thereby increasing the inductance $L_s$ of the motor system 1. However, in the case where the inductance $L_a$ of the motor 3 itself is too large, the inductance $L_s$ of the motor system is adjusted by connecting the correcting inductances 5U, 5V, 5W parallel to the motor windings 3U, 3V, 3W, respectively.

In the motor with permanent magnets and the motor system, the value $\alpha$ produced by dividing, by the induced voltage constant ke, the product of the inductance Lm of the motor itself or the inductance Ls of the motor system in the d-q coordinate system is selected to meet a predetermined condition. Therefore, the range of rotational speeds in which the motor can be operated while maintaining a predetermined output under field weakening control can be widened.

If a condition is established to determine a ratio by which the rated rotational speed under normal operating conditions can be divided into a rotational speed under field weakening control, then conditions for a motor or a motor system that can be used can be determined.

Although there have been described what are at present considered to be the preferred embodiments of the invention, it will be understood that the invention may be embodied in other specific forms without departing from the essential characteristics thereof. The present embodiments are therefore to be considered in all respects as illustrative, and not restrictive. The scope of the invention is indicated by the appended claims rather than by the foregoing description.

## Claims

1. A synchronous motor (3) with permanent magnets having an inductance La, a rated current Ip, and an induced voltage constant ke in a d/q-axis conversion system of the synchronous motor, characterized in that the inductance La, rated current Ip and induced voltage constant ke have values such that a value $\alpha$ produced by dividing the product of the inductance La and the rated current Ip by the induced voltage constant ke according to an equation (a) falls in a range represented by an inequality (b):

$$La \cdot Ip/ke = \alpha \tag{a}$$

$$\sqrt{\frac{(k-1)^2}{k^2-1}} \le \alpha \le \sqrt{\frac{(k+1)^2}{k^2-1}} \tag{b}$$

where k is a ratio greater than one by which a rated rotational speed can be multiplied to give a rotational speed for operation without reducing the output below the rated output, and wherein the value $\alpha$ is equal to 1.

2. A motor system (1) comprising a synchronous motor (3) with permanent magnets and a driver circuit for driving the synchronous motor, the motor system (1) having an inductance Ls, a rated current Ip, and an induced voltage constant ke in a d/q-axis conversion system of the motor system, characterized in that the inductance Ls, rated current Ip and induced voltage constant ke have values such that a value $\alpha$ produced by dividing the product of the inductance Ls and the rated current Ip by the induced voltage constant ke according to an equation (c) falls in a range represented by an inequality (d):

$$Ls \cdot Ip/ke = \alpha \tag{c}$$

$$\sqrt{\frac{(k-1)^2}{k^2-1}} \leq \alpha \leq \sqrt{\frac{(k+1)^2}{k^2-1}} \qquad (d)$$

where k is a ratio by which a rated rotational speed can be multiplied to give a rotational speed for operation without reducing the output below the rated output and wherein the value $\alpha$ is equal to 1.

3. A motor system according to claim 2, further including correcting-inductances (5U,5V,5W) connected in series or parallel to windings (3U,3V,3W) of the synchronous motor (3) for making the inductance Ls satisfy the equation (c).

**Patentansprüche**

1. Synchronmotor (3) mit Permanentmagneten, der eine Induktanz La, einen Nennstrom Ip und eine Konstante induzierter Spannung ke in einem d/q-Achsenkonversionssystem des Synchronmotors aufweist, dadurch gekennzeichnet, daß die Induktanz La, der Nennstrom Ip und die Konstante induzierter Spannung ke derartige Werte haben, daß ein Wert $\alpha$, der durch Teilen des Produkts aus der Induktanz La und dem Nennstrom Ip durch die Konstante induzierter Spannung ke gemäß einer Gleichung (a) gebildet ist, in einen durch eine Ungleichung (b) ausgedrückten Bereich fällt:

$$La \cdot Ip/ke = \alpha \qquad (a)$$

$$\sqrt{\frac{(k-1)^2}{k^2-1}} \leq \alpha \leq \sqrt{\frac{(k+1)^2}{k^2-1}} \qquad (b)$$

wobei k ein Verhältnis größer als eins ist, mit dem eine Nenndrehzahl multipliziert werden kann, um eine Drehzahl für Betrieb ohne Minderung der Ausgangsleistung unter die Nennausgangsleistung zu erhalten, und wobei der Wert $\alpha$ gleich 1 ist.

2. Motorsystem (1), umfassend einen Synchronmotor (3) mit permanentmagneten und eine Treiberschaltung zum Antrieb des Synchronmotors, wobei das Motorsystem (1) eine Induktanz Ls, einen Nennstrom $I_P$ und eine Konstante induzierter Spannung ke in einem d/q-Achsenkonversionssystem des Motorsystems aufweist, dadurch gekennzeichnet, daß die Induktanz Ls, der Nennstrom Ip und die Konstante induzierter Spannung ke derartige Werte haben, daß ein Wert $\alpha$, der durch Teilen des Produkts aus der Induktanz Ls und dem Nennstrom Ip durch die Konstante induzierter Spannung ke gemäß einer Gleichung (c) gebildet ist, in einen durch eine Ungleichung (d) ausgedrückten Bereich fällt:

$$Ls \cdot Ip/ke = \alpha \qquad (c)$$

$$\sqrt{\frac{(k-1)^2}{k^2-1}} \leq \alpha \leq \sqrt{\frac{(k+1)^2}{k^2-1}} \qquad (d)$$

wobei k ein Verhältnis ist, mit dem eine Nenndrehzahl multipliziert werden kann, um eine Drehzahl für den Betrieb ohne Minderung der Ausgangsleistung unter die Nennausgangsleistung zu erhalten, und wobei der Wert von $\alpha$ gleich 1 ist.

3. Motorsystem nach Anspruch 2, das ferner Korrekturinduktanzen (5U, 5V, 5W) umfaßt, die in Serie oder parallel zu Wicklungen (3U, 3V, 3W) des Synchronmotors (3) angeschlossen sind, damit die Induktanz Ls der Gleichung (c) genügt.

**Revendications**

1. Moteur synchrone (3) avec aimants permanents, d'inductance La, d'intensité nominale Ip et de constante de tension induite ke dans un système de conversion axe d/axe q du moteur synchrone, caractérisé par le fait que l'inductance La, l'intensité nominale Ip et la constante de tension induite ke ont de valeurs telles qu'une valeur $\alpha$ obtenue en divisant le produit de l'inductance La et de l'intensité nominale Ip par la constante de tension induite ke selon l'équation (a) tombe sur une plage représentée par une inégalité (b):

$$La \cdot Ip/ke = \alpha \qquad\qquad (a)$$

$$\sqrt{\frac{(k-1)^2}{k^2-1}} \leq \alpha \leq \sqrt{\frac{(k+1)^2}{k^2-1}} \qquad\qquad (b),$$

où k est un rapport supérieur à un par lequel on peut multiplier une vitesse de rotation nominale pour obtenir une vitesse de rotation permettant de fonctionner sans réduire la puissance produite en dessous de la puissance nominale, et dans lequel la valeur $\alpha$ est égale à un.

2. Système moteur (1) comportant un moteur synchrone (3) avec des aimants permanents et un circuit d'excitatrice pour exciter le moteur synchrone, le système moteur (1) ayant une inductance Ls, une intensité nominale Ip et une constante de tension induite ke dans un système de conversion axe d/axe q du système moteur, caractérisé par le fait que l'inductance Ls, l'intensité nominale Ip et la constante de tension induite ke ont des valeurs telles qu'une valeur $\alpha$ obtenue en divisant le produit de l'inductance Ls et de l'intensité nominale Ip par la constante de tension induite ke selon l'équation (c) tombe sur une plage représentée par une inégalité (d):

$$Ls \cdot Ip/ke = \alpha \qquad\qquad (c)$$

$$\sqrt{\frac{(k-1)^2}{k^2-1}} \leq \alpha \leq \sqrt{\frac{(k+1)^2}{k^2-1}} \qquad\qquad (d)$$

où k est un rapport par lequel on peut multiplier une vitesse de rotation nominale pour obtenir une vitesse de rotation permettant de fonctionner sans réduire la puissance produite en dessous de la puissance nominale, et dans lequel la valeur $\alpha$ est égale à un.

3. Système moteur selon la revendication 2, comportant en outre des inductances correctrices (5U,5V,5W) reliées en série ou en parallèle aux enroulements (3U,3V,3W) du moteur synchrone (3) pour faire en sorte que l'inductance Ls satisfasse l'équation (c).

# FIG. 1

# FIG. 2

# FIG. 3

# FIG. 4

# FIG. 5

# FIG. 6

# FIG. 7

α = 1

TORQUE

OUTPUT

B

TORQUE

A          kA          ROTATIONAL SPEED

# FIG. 8

α = 0.5

TORQUE

OUTPUT

B

TORQUE

A          ROTATIONAL SPEED

# FIG. 9

TORQUE

α = 0.75

B

OUTPUT

TORQUE

A    kA    ROTATIONAL SPEED

# FIG. 10

TORQUE

α = 1.25

OUTPUT

B

TORQUE

A    kA    ROTATIONAL SPEED

## FIG. 11

TORQUE
PHASE RESISTANCE R DOUBLED

OUTPUT

B

TORQUE

A
kA
ROTATIONAL SPEED

## FIG. 12

TORQUE
PHASE RESISTANCE R REDUCED TO HALF

OUTPUT

B

TORQUE

A
kA
ROTATIONAL SPEED

# FIG. 13